(19) Europäisches Patentamt
European Patent Office
Office européen des brevets

(11) Veröffentlichungsnummer: **0 258 737**
**A2**

(12) **EUROPÄISCHE PATENTANMELDUNG**

(21) Anmeldenummer: **87112009.3**

(22) Anmeldetag: **19.08.87**

(51) Int. Cl.4: **A01N 57/34**, B27K 3/50, A23C 7/02, //(A01N57/34,33:12)

(30) Priorität: **25.08.86 DE 3628801**

(43) Veröffentlichungstag der Anmeldung: **09.03.88 Patentblatt 88/10**

(84) Benannte Vertragsstaaten: **AT BE CH DE ES FR GB IT LI NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Lintner, Karl, Dr.**
**Kühlwetterstrasse 10**
**D-4000 Düsseldorf 1(DE)**
Erfinder: **Orth, Reinhard, Dr.**
**Marie-Curie-Strasse 1**
**D-4019 Monheim(DE)**
Erfinder: **Lehmann, Rudolf, Dr.**
**Schnugsheide 2**
**D-5653 Leichlingen(DE)**
Erfinder: **Müller, Hans-Jürgen, Dr.**
**Bahlenstrasse 99**
**D-4000 Düsseldorf(DE)**

(54) **Antimikrobiell wirksame Gemische.**

(57) Antimikrobiell wirksame Gemische enthalten quartäre Ammoniumverbindungen und quartäre Phosphoniumverbindungen im Gewichtsverhältnis von 1 : 9 bis 9 : 1.

EP 0 258 737 A2

Xerox Copy Centre

**"Antimikrobiell wirksame Gemische"**

Die Erfindung betrifft antimikrobiell wirksame Gemische mit einem Gehalt an quaternären Ammoniumverbindungen und quaternären Phosphoniumverbindungen.

Die Verwendung von quartären Ammoniumhalogeniden als Wirkstoffe in antimikrobiellen Mitteln ist seit langem bekannt, siehe beispielsweise K. Lindner, Tenside-Textilhilfsmittel-Waschrohstoffe, 2. Auflage, Band 1, Wissenschaftliche Verlagsgesellschaft mbH, Stuttgart 1964, Seite 984 und Kirk-Othmer, Encyclopedia of Chemical Technology, Third Editon, Volume 19, John Wiley & Sons, New York, Chichester; Brisbane, Toronto, Singapore 1982, Seite 530. Auch die Verwendung von quartären Phosphoniumhalogeniden als Bakterizide und Fungizide ist seit längerer Zeit bekannt, siehe beispielsweise DE-OS 25 33 275 und Chemical Abstracts, Volume 84, Referat 180 392v (1976).

Auf dem Gebiet der Desinfektions-und Konservierungsmittel besteht unter den Gesichtspunkten des Umweltschutzes und der Wirtschaftlichkeit ein Bedürfnis nach Wirkstoffen und Wirkstoffkombinationen, die - schon bei geringen Anwendungskonzentrationen eine hinreichende antimikrobielle Wirkung zeigen. In diesem Zusammenhang sind nicht nur neue Verbindungen von Interesse, sondern auch synergistisch wirkende Kombinationen bereits bekannter Wirkstoffe.

Es wurde gefunden, daß Kombinationen aus quartären Ammoniumhalogeniden vom Benzalkontyp und bestimmten quartären Phosphoniumhalogeniden eine synergistische antimikrobielle Wirkung zeigen, wenn die beiden Komponenten in einem bestimmten Gewichtsverhältnis zueinander vorliegen.

Gegenstand der Erfindung sind antimikrobiell wirksame Gemische enthaltend

a) mindestens eine antimikrobiell wirksame quartäre Ammoniumverbindung und

b) mindestens eine antimikrobiell wirksame quartäre Phosphoniumverbindung, wobei die Komponenten a und b im Gewichtsverhältnis von a : b im Bereich von 1 : 9 bis 9 : 1 vorliegen.

Dabei kommen als antimikrobiell wirksame quartäre Ammoniumverbindungen insbesondere Substanzen des Benzalkontyps in Betracht, die der Formel I

$$\left[C_6H_5 - CH_2 - \overset{\oplus}{N}(CH_3)_2\ R^1\right] X^{\ominus} \qquad (I)$$

entsprechen, in der $R^1$ einen vorzugsweise geradkettigen Alkylrest mit 8 bis 18 Kohlenstoffatomen und $X^{\ominus}$ ein Halogenidanion, insbesondere ein Chloridanion darstellen. Diese quartären Ammoniumverbindungen können in den erfindungsgemäßen Gemischen als chemische Individuen oder als Gemische enthalten sein. Beispiele für derartige antimikrobiell wirksame quartäre Ammoniumverbindungen sind Benzyl-dimethyl-n-decylammoniumchlorid, Benzyl-dimethyl-n-dodecylammoniumchlorid, Benzyl-dimethyl-n-tetradecylammoniumchlorid, Benzyl-dimethyl-n-octadecylammoniumchlorid sowie Benzyl-dimethyl-kokosalkylammoniumchlorid, in dem der Rest $R^1$ aus der Formel I von dem hydrierten Fettsäuregemisch des Kokos öls abgeleitet ist. Benzyl-dimethyl-n-dodecylammoniumchlorid und Benzyl-dimethyl-n-tetradecylammoniumchlorid sowie Gemische dieser Verbindungen können dabei eine bevorzugte Stellung einnehmen.

Als antimikrobiell wirksame quartäre Phosphoniumverbindungen eignen sich insbesondere Verbindungen der Formel II,

$$\left[R^2_3\ \overset{\oplus}{P}\ R^3\right] Y^{\ominus} \qquad (II)$$

in der $R^2$ einen Alkylrest mit 1 bis 6 Kohlenstoffatomen, einen Hydroxyalkylrest mit 1 bis 6 Kohlenstoffatomen oder einen Phenylrest, $R^3$ einen Alkylrest mit 8 bis 18 Kohlenstoffatomen und Y ein Halogenidanion, insbesondere ein Chloridanion oder ein Bromidanion bedeutet. Die Reste $R^2$ und $R^3$ in der Formel II sind vorzugsweise geradkettig. Die quartären Phosphoniumverbindungen können in den erfindungsgemäßen Gemischen einzeln oder als Gemische vorhanden sein. Beispiele für derartige quartäre Phosphoniumverbindungen sind Trimethyl-n-dodecylphosphoniumchlorid, Triethyl-n-decylphosphoniumbromid, Tri-n-propyl-n-tetradecylphosphoniumchlorid, Trimethylol-n-hexadecylphosphoniumchlorid, Tri-n-butyl-n-decylphosphoniumchlorid, Tri-n-butyl-n-dodecylphosphoniumbromid, Tri-n-butyl-n-tetradecylphosphoniumchlorid, Tri-n-butyl-n-hexadecylphosphoniumbromid, Tri-n-hexyl-n-decylphosphoniumchlorid, Triphenyl-n-dodecylphosphoniumchlorid, Triphenyl-n-tetradecylphosphoniumbromid und Triphenyl-n-octadecylphosphoniumchlorid. Dabei kann dem Tri-n-butyl-n-tetradecylphosphoniumchlorid eine bevorzugte Stellung zukommen.

Zur Herstellung gebrauchsfertiger antimikrobieller Mittel können die erfindungsgemäßen antimikrobiell wirksamen Gemische in Form von wasserhaltigen Konzentraten bereitgestellt werden, in denen die Gesamtkonzentration der Komponenten a und b zwischen 30 und 50 Gew.-% ausmachen kann. In den wasserhaltigen gebrauchsfertigen antimikrobiellen Mitteln, wie sie für Desinfektions-und Konservierungszwecke eingesetzt werden, liegt die Gesamtkonzentration der Komponenten a und b im allgemeinen zwischen 0,005 und 5 Gew.-%, bezogen auf das gesamte Mittel.

Die gebrauchsfertigen antimikrobiell wirksamen Gemische bestehen im einfachsten Fall aus einer wäßrigen Lösung, in der die quartäre Ammoniumverbindung und die quartäre Phosphoniumverbindung im angegebenen Verhältnis und in der angegebenen Konzentration gelöst sind. In der Mehrzahl der Fälle enthalten die für die praktische Anwendung bestimmten Gemische weitere üblicherweise verwendete Bestandteile, die je nach der vorgesehenen Anwendungsform und dem Anwendungszweck ausgewählt werden. Für flüssige Zubereitungen kommen als Lösungsmittel neben Wasser auch Gemische aus Wasser und wassermischbaren organischen Lösungsmitteln in Betracht, beispielsweise Ethanol, Isopropanol, Ethylenglykol, Propylenglykol, Ethylethylenglykol und Propylpropylenglykol. Solche Lösungen lassen sich gut versprühen, wobei man entweder Druckluft anwendet oder ein in der Aerosoltechnik für die Herstellung von Sprays gebräuchliches Treibmittel einsetzt.

Wenn neben der antimikrobiellen Wirkung eine zusätzliche Reinigungswirkung erwünscht ist, können die erfindungsgemäßen Gemische Tenside, insbesondere nichtionische Tenside enthalten. Beispiele für geeignete Tenside sind Anlagerungsprodukte von 4 bis 40, vorzugsweise 4 bis 20 Mol Ethylenoxid an ein Mol Fettalkohol, Alkylcyclohexanol, Alkylphenol, Fettsäure, Fettamin, Fettsäureamid oder Alkansulfonamid. Von besonderem Interesse sind Anlagerungsprodukte von 5 bis 16 Mol Ethylenoxid an Kokos-oder Talgfettalkohole, an Oleylalkohol, ein Gemisch aus Oleylalkohol und Cetylalkohol sowie an Mono-, Di-oder Trialkylphenole und an Monoalkylcyclohexanole mit 6 bis 14 Kohlenstoffatomen in den Alkylresten. Auch gemischte Anlagerungsprodukte von Ethylenoxid und Propylenoxid an die genannten Verbindungen mit einem aktiven Wasserstoffatom kommen in Betracht. Die genannten Alkoxylierungs produkte können auch endgruppenverschlossen sein, beispielsweise durch Ether-oder Acetalgruppen.

In den erfindungsgemäßen Gemischen können ferner Gerüstsubstanzen vorhanden sein; als solche eignen sich beispielsweise Alkalisalze der Glukonsäure, insbesondere Natriumglukonat, die Alkalisalze der Nitrilotriessigsäure, Ethylendiamintetraessigsäure, Hydroxyethandiphosphonsäure, Phosphonobutantricarbonsäure, Milchsäure, Citronensäure oder Weinsäure. Weiterhin kommen als Gerüstsubstanzen die wasserlöslichen Salze höhermolekularer Polycarbonsäuren in Betracht, etwa Polymerisate der Maleinsäure, Itakonsäure, Fumarsäure und Zitraconsäure. Auch Mischpolymerisate dieser Säuren untereinander oder mit anderen polymerisierbaren Monomeren, wie z.B. Ethylen, Propylen, Acrylsäure, Vinylacetat, Isobutylen, Acrylamid und Styrol sind brauchbar.

In die erfindungsgemäßen Gemische können auch Reinigungsverstärker wie Fettsäuremono-und -diethanolamide, beispielsweise Kokosfettsäuremonoethanolamid und Kokosfettsäurediethanolamid, und Anlagerungsprodukte von bis zu 4 Mol Ethylenoxid oder Propylenoxid an Alkylamine mit 12 bis 18 Kohlenstoffatomen oder Fettalkohole mit 8 bis 12 Kohlenstoffatomen und freie Fettalkohole mit 8 bis 12 Kohlenstoffatomen sowie Reinigungsverstärker auf Cellulosebasis eingearbeitet werden.

Darüberhinaus kann es für weitere Anwendungsbereiche vorteilhaft sein, wenn die erfindungsgemäßen Gemische zusätzlich zu der erfindungsgemäßen Kombination aus quartären Ammoniumverbindungen und quartären Phosphoniumverbindungen weitere antimikrobiell wirksame Substanzen enthalten.

Für die Herstellung gebrauchsfertiger Reinigungslösungen mit desinfizierender Wirkung können neben flüssigen Konzentraten auch feste Produkte, vorzugsweise in Pulver-oder Granulatform bereit gestellt werden, die die erfindungsgemäßen antimikrobiell wirksamen Gemische enthalten.

Die erfindungsgemäßen antimikrobiell wirksamen Gemische können als Desinfektions-und Konservierungsmittel auf vielen Gebieten zum Einsatz gelangen, beispielsweise bei der Flächendesinfektion in Krankenhäusern, Schulen, Badeanstalten, öffentlichen Verkehrsmitteln, gewerblichen Betrieben und Industrieanlagen. Besondere Bedeutung kommt den erfindungsgemäßen Gemischen auf dem Gebiet der Desinfektion in landwirtschaftlichen Betrieben, in Molkereien und Brauereien und anderen Betrieben der Nahrungsmittel-und Getränkeindustrie zu. Weiterhin können die erfindungsgemäßen Gemische bei der Konservierung technischer Produkte wie Farbstoffdispersionen, Klebstoffen, Bohr-und Schneidölen oder Produkten der papier-, pappe-oder lederverarbeitenden Industrie sowie zur Konservierung von Industrie-und

Brauchwasser Anwendung finden. Schließlich können die erfindungsgemäßen Gemische auch zum Materialschutz eingesetzt werden, beispielsweise zum Imprägnieren von Holz. Hier können u.a. Kisten, wie sie in der gewerblichen Pilzzucht verwendet werden, wirkungsvoll gegen den Befall durch das Kulturmyzel ausgerüstet werden.

## Beispiele

### Beispiel 1

Aus Benzyl-dimethyl-n-dodecyl/n-tetradecylammoniumchlorid (70 Mol-% $C_{12}$; 30 Mol-% $C_{14}$; Produkt A) und Tri-n-butyl-n-tetradecylphosphoniumchlorid (Produkt B) wurden die folgenden erfindungsgemäßen Konzentrate (Produkte C bis F) hergestellt (GT = Gewichtsteile):

Produkt C (Verhältnis a : b = 3 : 1/)

3 GT Produkt A
1 GT Produkt B
6 GT Wasser

Produkt D (Verhältnis a : b = 1 : 9)

0,4 GT Produkt A
3,6 GT Produkt B
6 GT Wasser

Produkt E (Verhältnis a : b = 9 : 1)

3,6 GT Produkt A
0,4 GT Produkt B
6 GT Wasser

Produkt F (Verhältnis 1 : 3)

1 GT Produkt A
3 GT Produkt B
6 GT Wasser

Die mikrobistatische Wirksamkeit der erfindungsgemäßen Gemische (Produkte C bis F) im Vergleich zu der der Einzelkomponenten Benzyl-dimethyl-n-dodecyl/n-tetradecylammoniumchlorid (Produkt A) und Tri-n-butyl-n-tetradecylphosphoniumchlorid (Produkt B) wurde gegenüber folgenden Testkeimsuspensionen bestimmt:

1. Escherichia coli $2 \times 10^9$ Keime/ml
2. Pseudomonas aeruginosa $5 \times 10^8$ Keime/ml
3. Aspergillus niger $5 \times 10^7$ Keime/ml
4. Penicillium camerunense $5 \times 10^7$ Keime/ml
5. Penicillium funiculosum $3 \times 10^7$ Keime/ml
6. Trichoderma viride $6 \times 10^7$ Keime/ml

Die Hemmkonzentrationen der zu untersuchenden Substanzen und Substanzgemische wurden nach den Richtlinien für die Prüfung und Bewertung chemischer Desinfektionsverfahren, Kapitel 2.1, abgedruckt in Zbl. Bakt. Hyg., I. Abt. Orig. B 172, 536-537 ermittelt. Die dort beschriebenen Bedingungen wurden insofern abgewandelt als für Pseudomonas aeruginosa und Aspergillus niger folgende Wirkstoffkonzentrationen (in ppm) getestet wurden: 100, 75, 45, 30, 20, 15 und 10. Bei allen übrigen Testkeimen betrugen die Wirkstoffkonzentrationen (in ppm): 20, 15, 9, 6, 4, 3 und 2.

Die gefundenen Ergebnisse sind in der nachstehenden Tabelle I wiedergegeben.

## TABELLE I

### Hemmkonzentrationen (in ppm) der Produkte A bis F

| Produkt | Testkeim 1 | 2 | 3 | 4 | 5 | 6 |
|---|---|---|---|---|---|---|
| A | 20 | 75 | 100 | 50 | 5 | 20 |
| B | 9 | 45 | 50 | 5 | 5 | 5 |
| C | 15 | 75 | 75 | 3 | 2 | 6 |
| D | 20 | 75 | 100 | 6 | 2 | 9 |
| E | 9 | 45 | 30 | 2 | 2 | 3 |
| F | 9 | 30 | 30 | 2 | 3 | 3 |

Beispiel 2

Fichtenholzplättchen der Abmessung $10 \times 20 \times 2$ cm wurden zur Imprägnierung 1, 2 und 4 Minuten lang in eine Behandlungslösung der Zusammensetzung

2,0 GT Benzyl-dimethyl-n-dodecyl/n-tetradecylammoniumchlorid (70 Mol-% n-$C_{12}$; 30 Mol-% n-$C_{14}$)
0,5 GT Tri-n-butyl-n-tetradecylphosphoniumchlorid
97,5 GT Wasser

getaucht und danach getrocknet. Die vorbehandelten Holzplättchen wurden senkrecht in Holzkisten gestellt, die frisch mit Kompost gefüllt waren, und anschließend 12 Wochen lang den Bedingungen einer Champignon-Zuchtperiode (16-18 °C; 85-95 % Luftfeuchtig keit) ausgesetzt. Als Kontrollproben wurden Fichtenholzplättchen verwendet, die nur 1/2 Minute mit Wasser getränkt worden waren.

Nach dem Entleeren der Pilzkisten wurden die Holzplättchen untersucht und nach der folgenden Skala bewertet:

1 überhaupt keine Myzelspuren
2 geringste Myzelspuren
3 vereinzelt sehr dünne Myzelspuren
4 etwas mehr als nur vereinzelte Myzelspuren
5 größere Myzelflächen, vereinzelt nicht bewachsene Flächen
6 größere Myzelflächen doch dünner Belag, keine unbewachsene Flächen
7 ganzes Brett bewachsen, teilweise dicker Myzelbelag
8 ganzes Brett bewachsen, ausgedehnte Flächen mit dickerem Myzelbelag
9 ganzes Brett mit dickem Myzelbelag bewachsen

Die gefundenen Ergebnisse sind in der nachfolgenden Tabelle II wiedergegeben.

## TABELLE II

Hemmung des Wachstums von Pilzmyzel auf Fichtenholz (12 Wochen; 16-18 %; 85-95 % Luftfeuchtigkeit)

| – | Tauchzeit | Beurteilung 1 | 2 | 3 | 4 | 5 | 6 | Durchschnitt |
|---|---|---|---|---|---|---|---|---|
| Produkt A | 1 | 3 | 6 | 5 | 3 | 5 | 4 | 4,3 |
| | 2 | 3 | 2 | 5 | 2 | 4 | 5 | 3,5 |
| | 4 | 3 | 5 | 2 | 5 | 6 | 2 | 3,8 |
| Wasser | 0,5 | 5 | 7 | 6 | 7 | 6 | 6 | 6,2 |

Beispiel 3

Durch Vermischen der Einzelbestandteile wurde ein Stalldesinfektionsmittel der folgenden Zusammensetzung erhalten (GT = Gewichtsteile):

5, 0 GT Phosphonobutantricarbonsäure
10,0 GT Kaliumhydroxid
2,0 GT Anlagerungsprodukt von 12 Mol Ethylenoxid an ein Mol $C_{8-18}$-Fettamin
1,5 GT Benzyl-dimethyl-n-dodecyl/n-tetradecylammoniumchlorid (70 Mol-% $C_{12}$; 30 Mol-% $C_{14}$)
0,5 GT Tri-n-butyl-n-tetradecylphosphoniumchlorid
81,0 GT Kondenswasser

Beispiel 4

Durch Vermischen der Einzelbestandteile wurde ein desinfizierendes Reinigungsmittel für Melkanlagen mit folgender Zusammensetzung erhalten:

15 GT Natriummetasilikat, wasserfrei
40 GT Natriumcarbonat
8 GT Tetranatriumhydroxyethandiphosphonat
0,5 GT Benzyl-dimethyl-n-dodecyl/n-tetradecylammoniumchlorid (70 Mol-% $C_{12}$; 30 Mol-% $C_{14}$)
0,5 GT Tri-n-butyl-n-tetradecylphosphoniumchlorid
35 GT Natriumsulfat, wasserfrei
1 GT Entschäumer auf Silikonbasis.

## Ansprüche

1. Antimikrobiell wirksame Gemische enthaltend
   a) mindestens eine antimikrobiell wirksame quartäre Ammoniumverbindung und
   b) mindestens eine antimikrobiell wirksame quartäre Phosphoniumverbindung,

wobei die Komponenten a und b im Gewichtsverhältnis von a : b im Bereich von 1 : 9 bis 9 : 1 vorliegen.

2. Antimikrobiell wirksame Gemische nach Anspruch 1, dadurch gekennzeichnet, daß sie als antimikrobiell wirksame quartäre Ammoniumverbindungen Substanzen enthalten, die der Formel I

$$\left[ C_6H_5 - CH_2 - \overset{\oplus}{N}(CH_3)_2\ R^1 \right] X^{\ominus} \qquad (I)$$

entsprechen, in der $R^1$ einen vorzugsweise geradkettigen Alkylrest mit 8 bis 18 Kohlenstoffatomen und $X^{\ominus}$ein Halogenidanion, vorzugsweise ein Chloridanion darstellen.

3. Antimikrobiell wirksame Gemische nach den Ansprüchen 1 und 2, dadurch gekennzeichnet, daß sie als antimikrobiell wirksame quartäre Ammoniumverbindungen Benzyl-dimethyl-n-dodecylammoniumchlorid, Benzyl-dimethyl-n-tetradecylammoniumchlorid oder Gemische dieser Verbindungen enthalten.

4. Antimikrobiell wirksame Gemische nach den Ansprüchen 1 bis 3, dadurch gekennzeichnet, daß sie als antimikrobiell wirksame quartäre Phosphoniumverbindungen Substanzen enthalten, die der Formel II

$$\left[ R^2_3\ \overset{\oplus}{P}\ R^3 \right] Y^{\ominus} \qquad (II)$$

entsprechen, in der $R^2$ einen Alkylrest mit 1 bis 6 Kohlenstoffatomen, einen Hydroxyalkylrest mit 1 bis 6 Kohlenstoffatomen oder einen Phenylrest, $R^3$ einen Alkylrest mit 8 bis 18 Kohlenstoffatomen und $Y^{\ominus}$ ein Halogenidanion, insbesondere ein Chloridanion oder ein Bromidanion bedeutet.

5. Antimikrobiell wirksame Gemische nach den Ansprüchen 1 bis 4, dadurch gekennzeichnet, daß die Reste $R^2$ und $R^3$ in der Formel II geradkettige Alkylreste sind.

6. Antimikrobiell wirksame Gemische nach den Ansprüchen 1 bis 5, dadurch gekennzeichnet, daß sie als antimikrobiell wirksame quartäre Phosphoniumverbindung Tri-n-butyl-n-tetradecylphosphoniumchlorid enthalten.

7. Antimikrobiell wirksame Gemische nach den Ansprüchen 1 bis 6, dadurch gekennzeichnet, daß sie als wasserhaltige Konzentrate mit einer Gesamtkonzentration der Komponenten a und b zwischen 30 und 50 Gew.-%, bezogen auf das gesamte Konzentrat, vorliegen.

8. Antimikrobiell wirksame Gemische nach den Ansprüchen 1 bis 6, dadurch gekennzeichnet, daß sie als wasserhaltige gebrauchsfertige antimikrobielle Mittel mit einer Gesamtkonzentration der Komponenten a und b zwischen 0,005 und 5 Gew.-%, bezogen auf das gesamte Mittel, vorliegen.

9. Verwendung der antimikrobiell wirksamen Gemische nach den Ansprüchen 1 bis 8 in der Stalldesinfektion.

10. Verwendung der antimikrobiell wirksamen Gemische nach den Ansprüchen 1 bis 8 in der Desinfektion von Melkanlagen.

11. Verwendung der antimikrobiell wirksamen Gemische nach den Ansprüchen 1 bis 8 zum Materialschutz, insbesondere zum Holzschutz.